(19) Europäisches Patentamt
European Patent Office
Office européen des brevets

(11) Publication number: 0 227 913 B1

(12) EUROPEAN PATENT SPECIFICATION

(45) Date of publication of patent specification: 06.11.91

(51) Int. Cl.[5]: A01N 37/02, A01N 25/22

(21) Application number: 86115098.5

(22) Date of filing: 30.10.86

# (54) Stabilized gossyplure and methods for preparation thereof.

(30) Priority: 30.10.85 US 793032

(43) Date of publication of application:
08.07.87 Bulletin 87/28

(45) Publication of the grant of the patent:
06.11.91 Bulletin 91/45

(84) Designated Contracting States:
AT BE DE FR GB IT NL SE

(56) References cited:
WO-A-81/02505
FR-A- 2 498 891
GB-A- 2 067 406

COMMONWEALTH AGRICULTURAL BUREAUX, 1977, no. 77986463, CAB; R.J. MARKS: "Field evaluation of gossyplure, the synthetic sex pheromone of pectinophora gossypiella (Saund.) (Lepidoptera, Gelechiidae) in Malawi", & BULLETIN OF ENTOMOLOGICAL RESEARCH, vol. 66, no. 2, 1976, pages 267-278

CHEMICAL ABSTRACTS, vol. 98, no. 13, 28th March 1983, page 221, abstract no. 102724e, Columbus, Ohio, US; & CS-A-203 398 (JAN VRKOC) 27-02-1981

(73) Proprietor: PHILLIPS PETROLEUM COMPANY
5th and Keeler
Bartlesville Oklahoma 74004(US)

(72) Inventor: Drake, Charles Alfred
Route 1 Box 206
Nowata OK 74048(US)
Inventor: Byers, Jim Don
5508 S.E. Baylor Dr.
Bartlesville OK 74006(US)
Inventor: Kinder, Richard Allen
1009 S.E. May Lane
Bartlesville OK 74006(US)

(74) Representative: Dost, Wolfgang, Dr. rer. nat. Dipl.-Chem. et al
Patent- u. Rechtsanwälte Bardehle, Pagenberg, Dost, Altenburg Frohwitter & Partner
Galileiplatz 1
W-8000 München 80(DE)

EP 0 227 913 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

CHEMICAL ABSTRACTS, vol. 98, no. 13, 28th March 1983, page 221, abstract no 102725f, Columbus, Ohio, US; & CS-A-203 399 (JAN VRKOC) 27-02-198

CHEMICAL ABSTRACTS, vol. 98, no. 13, 28th March 1983, page 221, abstract no. 102726g, Columbus, Ohio, US; & CS-A-203 660 (JAN VRKOC) 31-03-1981

## Description

This invention relates to stabilized forms of gossyplure. In one aspect, the invention relates to methods for the stabilization of gossyplure.

### Background of the Invention

Gossyplure, a mixture of 7,11-hexadecadienyl acetate stereoisomers, is a known pheromone for several insect species. In order to make this compound widely available for use in insect control, economic large-scale synthetic conversion processes must be developed. While several synthetic routes for the preparation of gossyplure are known, there is the additional problem of stability of the pheromone products. Upon long term exposure of gossyplure to oxygen-containing atmospheres, it has been found that considerable amounts of pheromone decomposition occurs.

### Objects of the Invention

An object of the invention, therefore, is stabilized forms of gossyplure.

Another object of the present invention is a method to stabilize gossyplure.

These and other objects of the present invention will become apparent from further study of the disclosure and claims herein provided.

### Statement of the Invention

In accordance with the present invention, we have discovered that gossyplure compositions which are stable to extended periods of exposure to oxygen-containing atmospheres result when small, but effective amounts of 2,6-ditertiaryalkyl-4-alkylphenols, e.g., 2,6-ditertiarybutyl-4-methylphenol, are added to gossyplure. The novel compositions of the present invention reduce the loss of gossyplure activities caused by exposure to oxygen-containing atmospheres and simplify the handling of gossyplure during formulation and application.

### Detailed Description of the Invention

In accordance with the present invention, novel compositions are provided comprising gossyplure and an effective, stabilizing amount of at least one 2, 6-ditertaryalkyl-4-alkylphenol, having the structure:

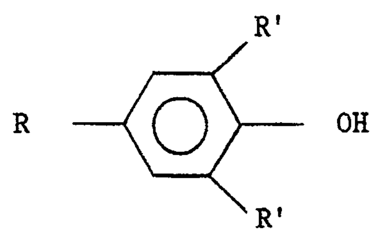

wherein R is a 1 up to a 4 carbon alkyl radical and R' is a 4 up to a 10 carbon tertiaryalkyl carbon radical. Examples of compounds contemplated by the above structure include, but are not limited to 2,6-ditertiarybutyl-4-methylphenol, also known as 2,6-di-t-butyl-4-methylphenol and 2,6-di-t-butyl-p-cresol, 2,6-ditertiarybutyl-4-ethylphenol, 2,6-ditertiarybutyl-4-propylphenol, 2,6-ditertiarypentyl-4-methylphenol, 2,6-ditertiaryhexyl-4-ethylphenol, and the like.

In accordance with another embodiment of the present invention, a method for stabilizing gossyplure is provided which comprises adding an effective, stabilizing amount of at least one 2,6-ditertiaryalkyl-4-alkylphenol to gossyplure.

It has been observed that when gossyplure samples are exposed to air for extended periods of time substantial amounts of decomposition occur, e.g., 25-50 percent of the gossyplure activity is lost. In addition to the reduction in gossyplure activity observed upon exposure to oxygen-containing atmospheres, it was also observed that varying levels of color formation occurred as a result of the exposure of the gossyplure sample to oxygen. We have discovered that the addition of 2,6-ditertiaryalkyl-4-alkylphenols to gossyplure results in novel compositions which are substantially resistant to degradation upon exposure to air.

Upon testing of several known antioxidants, it was surprisingly found that 2,6-ditertiaryalkyl-4-phenols were far superior in preventing the loss of gossyplure activity and the formation of color in the gossyplure upon exposure to oxygen at elevated temperatures. It was unexpected to find that the effectiveness of antioxidants would vary so widely in terms of both preventing reduction in gossyplure concentration and the degree of control over color formation upon exposure of gossyplure to oxygen-containing atmospheres.

While those skilled in the art can readily determine the effective, stabilizing amount of at least one 2,6-ditertiaryalkyl-4-alkylphenol which will prevent color formation and reduce the loss of gossyplure activity upon exposure to oxygen-containing atmospheres, it is suggested that at least about 0.01 weight percent of 2,6-ditertiaryalkyl-4-alkylphenol be employed in order to obtain the desired improvement in gossyplure stability. The upper limit as to the amount of stabilizing additive to employ is mainly a matter of choice, although additional stabilization is not generally observed with greater than about 2 weight percent of stabilizing additive. Thus, amounts in the range of about 0.01 up to 2.0 weight percent stabilizing additive are typically employed. Preferably, for most efficient use of stabilizing additive, amounts in the range of about 0.05 up to 1.0 weight percent will be employed.

A further understanding of the present invention and its advantages will be provided by reference to the following non-limiting example.

## EXAMPLE

In a 200 mL three-necked flask fitted with magnetic stirrer, condenser, and thermometer were placed 20.00 grams of gossyplure, 20.00 grams of internal standard and the inhibitor to be tested. The flask was heated to about 100 °C (± 3 °C) for the desired period of time. Samples were then withdrawn and analyzed by gas liquid chromatography (glc).

The internal standard employed was n-hexadecane. The glc column used was a 25 meter x 0.20 millimeter internal diameter fused silica capillary column coated with 100 percent cyanopropyl silicon. Analyses were carried out at 160 °C isothermal.

The treatment conditions employed for several gossyplure samples, both with and without added antioxidant, are summarized in Table I. Each sample was heated in ambient air at atmospheric pressure, i.e., no effort was made to exclude the presence of oxygen. In addition to reporting the gossyplure purity as measured by glc after heat treatment, the color of the sample after treatment is also reported.

Table I

| Run # | Additive, Concentration (wt. %) | Test Conditions Time, hr. | Temp., °C | Gossyplure purity, % | Color |
|---|---|---|---|---|---|
| 1a | None | None | | 95.4 | Clear |
| 1b | " | 24 | 100 | 91.0 | Lt.Yellow |
| 1c | " | 48 | 100 | 87.5 | Dk.Yellow |
| 1d | " | 72 | 100 | 75.0 | Brown |
| 2a | OAP[a], 0.04 | 24 | 100 | 96.0 | Dk.Brown |
| 2b | OAP, 0.04 | 48 | 100 | 84.2 | Very Dark |
| 3 | TBT[b], 0.04 | 48 | 100 | 85.5 | Clear |
| 4a | TBHQ[c], 0.5 | 24 | 100 | 96.0 | Brown |
| 4b | TBHQ[c], 0.5 | 48 | 100 | 95.5 | Dk.Brown |
| 5a | TBC[d], 0.5 | 24 | 100 | 93.5 | Dk.Yellow |
| 5b | TBC[d], 0.5 | 48 | 100 | 91.0 | Very Dk.Yellow |
| 6a | DTBC[e], 0.02 | 24 | 100 | 95.0 | Clear |
| 6b | DTBC[e], 0.02 | 48 | 100 | 78.0 | Clear |
| 7a | DTBC, 0.03 | 24 | 100 | 95.5 | Clear |
| 7b | DTBC, 0.03 | 48 | 100 | 85.0 | Clear |
| 8a | DTBC, 0.04 | 24 | 100 | 96.0 | Clear |
| 8b | DTBC, 0.04 | 48 | 100 | 89.5 | Clear |
| 9a | DTBC, 0.5 | 24 | 100 | 96.0 | Clear |
| 9b | | 48 | 100 | 95.5 | Clear |
| 9c | | 72 | 100 | 94.5 | Clear |

[a] ortho-aminophenol
[b] 4,4'-thio-bis-6-t-butyl-meta-cresol
[c] t-butylhydroquinone
[d] t-butyl catechol
[e] 2,6-di-t-butyl-p-cresol

The results presented in Table I demonstrate that 2,6-di-t-butyl-4-methylphenol is effective for both reducing the loss of gossyplure activity and preventing discoloration of the gossyplure upon exposure to oxygen-containing atmospheres at elevated temperature. No other additive tested was capable of both reducing the loss of gossyplure activity and preventing the discoloration of the gossyplure sample.

## Claims

1. A composition comprising gossyplure and at least one 2,6-ditertiaryalkyl-4-alkylphenol , characterized in that said phenol is present in an amount of 0.01 to 2.0 wt.-%, and said phenol has the formula I

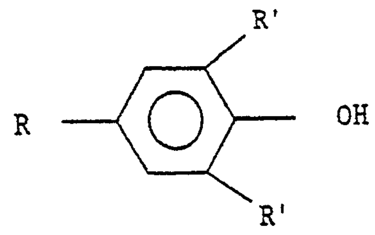

(I)

wherein R is a $C_{1-4}$-alkyl radical and R' is a $C_{4-10}$-tertiaryalkyl radical.

2. The composition of claim 1, characterized in that said phenol (I) is 2,6-ditertiarybutyl-4-methylphenol.

3. A method for stabilizing gossyplure, characterized by adding thereto at least one 2,6-ditertiaryalkyl-4-alkylphenol of the general formula I identified in claim 1 in an amount of from 0.01 to 2.0 wt.-%.

4. The method of claim 3 characterized by using as said phenol (I) 2,6-ditertiarybutyl-4-methylphenol.

**Revendications**

1. Composition comprenant du gossyplure et au moins un 2,6-ditert-alkyl-4-alkylphénol, caractérisée en ce que ce phénol est présent dans une quantité de 0,01 à 2,0 % en poids et en ce que ce phénol répond à la formule I

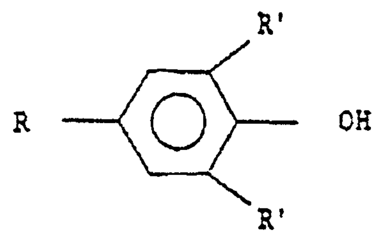

(I)

dans laquelle R est un radical alkyle en $C_1$ à $C_4$ et R' est un radical tert-alkyle en $C_4$ à $C_{10}$.

2. Composition selon la revendication 1, caractérisée en ce que ce phénol (I) est le 2,6-ditert-butyl-4-méthylphénol.

3. Procédé pour stabiliser le gossyplure, caractérisé en ce qu'on y ajoute au moins un 2,6-ditert-alkyl-4-alkylphénol répondant à la formule générale I identifiée dans la revendication 1, dans une proportion de 0,01 à 2,0 % en poids.

4. Procédé selon la revendication 3, caractérisé en ce qu'on utilise comme phénol (I) le 2,6-ditert-butyl-4-méthylphénol.

**Patentansprüche**

1. Zusammensetzung, enthaltend Gossyplure und mindestens ein 2,6-Di-tert.-alkyl-4-alkylphenol, dadurch gekennzeichnet, daß das Phenol in einer Menge von 0,01 bis 2,0 Gew.-% vorhanden ist und das Phenol die Formel I aufweist

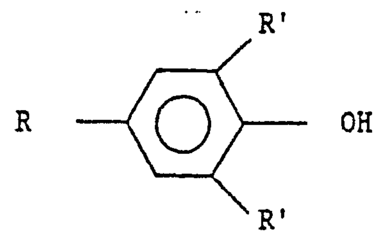

worin R einen $C_{1-4}$-Alkylrest bedeutet und R' einen $C_{4-10}$-tert.-Alkylrest bedeutet.

2. Zusammensetzung nach Anspruch 1, dadurch gekennzeichnet, daß es sich bei dem Phenol (I) um 2,6-Di-tert.-butyl-4-methylphenol handelt.

3. Verfahren zur Stabilisierung von Gossyplure, gekennzeichnet durch Zugabe von mindestens einem 2,6-Di-tert.-alkyl-4-alkylphnol der allgemeinen Formel I gemäß Anspruch 1 in einer Menge von 0,01 bis 2,0 Gew.-%.

4. Verfahren nach Anspruch 3, dadurch gekennzeichnet, daß als Phenol (I) 2,6-Di-tert.-butyl-4-methylphenol verwendet wird.